# FASCICULE DE BREVET EUROPEEN

(11) **EP 2 042 618 B1**
(45) Date de publication et mention de la délivrance du brevet: **20.07.2016**
(21) Numéro de dépôt: 08164794.3
(22) Date de dépôt: 22.09.2008
(51) Int. Cl.: C23C 4/18, B23P 6/00, F01D 5/00

(54) **Procédé de récupération d'éléments de turbomachine**
Rückgewinnungsverfahren von Bauteilen einer Turbomaschine
Method for recovering turbine engine components

(30) Priorité: 26.09.2007 FR 0757869
(43) Date de publication de la demande: 01.04.2009
(73) Titulaire: Snecma, 75015 Paris (FR)
(72) Inventeur: Gueguen, Mathieu, 75012 Paris (FR); Vassault, Marc Jacky, 91000 Evry (FR)
(74) Mandataire: Ilgart, Jean-Christophe

(56) Documents cités:
- EP-A- 0 504 095
- EP-A- 0 956 378
- EP-A- 1 496 474
- DE-A1- 3 325 251
- JP-A- 6 272 012
- JP-A- 62 127 457
- SU-A1- 1 785 291
- US-A- 4 960 611
- US-A- 5 576 069
- US-A1- 2003 167 616

## Description

### DOMAINE TECHNIQUE

L'invention concerne un procédé de récupération d'éléments de turbomachine selon le préambule de la revendication 1. Un tel procédé est connu du document DE-A-33 25 251.

Par le terme « récupération », on entend la mise en conformité d'une pièce neuve qui présente, en fin de fabrication, un ou plusieurs défauts qui peuvent compromettre son utilisation normale.

### ÉTAT DE LA TECHNIQUE ANTÉRIEURE

Les éléments entrant dans la constitution d'un turbomachine doivent présenter un état de finition extrêmement soigné et ceci dans les plus petits détails.

Les éléments de turbomachines, en particulier les éléments de pièces ou les éléments proches des pièces tournantes, sont pourvus d'un revêtement protecteur dont la nature dépend de la fonction de ces éléments et de leur nuance. Ainsi, les aubes d'une turbomachine sont généralement pourvues d'un revêtement servant de barrière thermique et de barrière à la diffusion des métaux constituant l'aube. Ainsi également, dans le cas de rotors formés de sections soudées entre elles, les léchettes de labyrinthe des rotors sont pourvues d'un revêtement abrasif, ces léchettes étant disposées en regard d'un matériau abradable solidaire des aubes fixes.

Le revêtement protecteur est généralement obtenu par un dépôt plasma ou un dépôt laser. Une aube dont la partie principale (ou substrat) est en un métal de base nickel, cobalt, fer ou titane peut posséder un revêtement par exemple en alumine, en zircone, en oxyde d'yttrium, en carbure de titane, en carbure de tungstène, etc. L'épaisseur de ce revêtement est par exemple compris entre 0,05 mm et 0,5 mm.

Suite à l'opération de revêtement, on constate parfois un manque de liaison ou une décohésion du revêtement sur le substrat de l'élément. Les pièces défectueuses peuvent être récupérées grâce à un traitement de surface, à savoir une dissolution chimique (au moyen d'un acide), permettant d'éliminer le revêtement défectueux. Une fois cette opération réalisée, un nouveau dépôt est effectué. Ce nouveau dépôt doit être à son tour vérifié. En plus de l'allongement des cycles de fabrication, ce procédé de récupération de l'art connu présente des inconvénients en termes de santé, de sécurité et d'environnement.

Par ailleurs, l'utilisation d'un faisceau laser pour traiter localement des pièces métalliques a fait l'objet de publications.

Le brevet US 4 960 611 divulgue un procédé permettant de remédier à de petits défauts dans un revêtement de pièces mécaniques, ces défauts étant notamment dus à des particules de poussières ou à des gouttelettes d'huile. Ce procédé a été en particulier conçu pour des carcasses de moteurs de véhicules, ces carcasses étant revêtues de plusieurs couches de protection : une couche d'accrochage, une couche intermédiaire et une couche de finition. Pour remédier à un défaut touchant la couche de finition (particule de poussière, gouttelette d'huile), il est proposé d'irradier la zone défectueuse de la couche de finition par un faisceau laser pour sublimer la particule de poussière ou la gouttelette d'huile et la zone adjacente de la couche de finition pour former une minuscule cavité dans la couche de finition. La cavité est ensuite remplie par une composition réparatrice qui est durcie par exemple au moyen d'un faisceau laser.

Le document EP-A-0 504 095 divulgue un procédé de réparation d'éléments d'une turbine à gaz et notamment un procédé de réparation d'aubes détériorées en service. En service, les aubes subissent des phénomènes d'oxydation, de fissures et d'érosion de métal, ces phénomènes étant dus à des abrasifs et des corrosifs contenus dans le flux gazeux frappant les aubes. La haute pression du flux gazeux circulant à haute température provoque alors une déformation des aubes. Ce document propose un procédé de réparation des aubes en dirigeant un faisceau laser sur une zone de la surface de l'aube à réparer. Le faisceau laser fond localement une fine couche superficielle de l'aube que l'on laisse ensuite se solidifier. La solidification provoque des forces de traction dans le matériau sous-jacent à la couche traitée, donnant une configuration concave à cette partie de l'aube. En appliquant le faisceau laser selon un trajet déterminé, il est possible de reconfigurer l'aube.

Le document DE-A-33 25 251 décrit un procédé de récupération d'un élément de turbomachine comprenant un substrat recouvert d'une couche de céramique adhérant au substrat par une couche adhésive. Le procédé comprend le contrôle de la pièce pour repérer les zones présentant un défaut de liaison de la couche de céramique. Les défauts sont repérés par balayage de l'élément de turbomachine au moyen d'un faisceau énergétique, de préférence un faisceau d'électrons. Le faisceau énergétique provoque un écaillage de la couche de céramique dans chaque zone de défaut. La suppression des défauts se fait par rectification des zones écaillées et ajout de matériau céramique.

Le brevet US 5 576 069 divulgue un procédé de refusion par laser d'une couche de zircone projetée par plasma sur un élément métallique recouvert d'une couche de liaison. Pour traiter des défauts de la couche de zircone, cette couche est refondue superficiellement. Une suspension de céraimque est ensuite appliquée. Puis la couche de céramique est à nouveau superficiellement refondue. Dans ce procédé, il n'y a pas de refusion du substrat, ni de la couche de liaison.

Le document JP 06 272012A divulgue la formation d'un revêtement protecteur, résistant à la corrosion et à l'érosion, sur un matériau de base en titane ou en alliage de titane. Le revêtement est obtenu par un dépôt hybride plasma et laser.

Le document SU-A1-1 785 291 divulgue un procédé de restauration d'aubes usagées. Après décapage et polissage des surfaces usagées, un revêtement de ces surfaces est réalisé par dépôt laser.

Le document JP 62 127457 A divulgue un procédé de traitement de la surface d'un film recouvrant un substrat pour éliminer des trous d'épingle (ou piqûres) dans le film. Un faisceau laser est utilisé pour provoquer une fusion locale du matériau constituant le film afin de boucler les trous d'épingle.

### EXPOSÉ DE L'INVENTION

La présente invention a été conçue pour remédier aux inconvénients du procédé de récupération d'éléments de turbomachine actuellement utilisé.

L'invention a pour objet un procédé de récupération d'un élément de turbomachine constitué par un substrat, formant le corps de l'élément, et un revêtement protecteur adhérant au substrat, le procédé comprenant :
- le contrôle de l'élément de turbomachine pour repérer les zones présentant un défaut de liaison entre le revêtement protecteur et le substrat,
- la suppression des défauts de liaison entre le revêtement protecteur et le substrat,
caractérisé en ce que les défauts de liaison sont supprimés au moyen d'un faisceau laser dirigé sur chaque zone présentant un défaut de liaison et réalisant une fusion localisée du revêtement protecteur et du substrat sous-jacent pour permettre une liaison saine après refroidissement de chaque zone, au niveau de ladite zone, entre le revêtement protecteur et le substrat après l'arrêt du faisceau laser.

Selon un mode de mise en oeuvre particulier, les zones présentant un défaut, repérées lors du contrôle de l'élément de turbomachine, sont analysées géométriquement en trois dimensions et enregistrées afin de fournir au faisceau laser un trajet déterminé et de lui conférer les caractéristiques lui permettant de supprimer chaque défaut de liaison.

En particulier, le trajet du faisceau laser sur l'élément de turbomachine peut être déterminé pour être le plus rapide possible.

Selon un autre mode de mise en oeuvre, la fusion localisée provoquée par le faisceau laser est réalisée sous atmosphère inerte ou réductrice.

Avantageusement, le faisceau laser est dirigé sur les zones présentant un défaut de liaison au moyen d'une fibre optique.

Le faisceau laser peut être émis par un laser YAG.

Le procédé peut comprendre, après la suppression des défauts de liaison, un nouveau contrôle de l'élément de turbomachine pour vérifier s'il subsiste des défauts de liaison entre le revêtement protecteur et le substrat.

Le procédé s'applique par exemple à la récupération d'aubes ou de léchettes de turbomachines.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue partielle, en coupe transversale, d'un élément de turbomachine présentant une zone de défaut de liaison entre le corps de l'élément et son revêtement protecteur,
- la figure 2 représente l'élément de turbomachine montré à la figure 1 subissant le procédé de récupération selon la présente invention,
- la figure 3 illustre l'opération de suppression des défauts de liaison entre le substrat et le revêtement protecteur d'un élément de turbomachine.

### EXPOSÉ DÉTAILLÉ D'UN MODE DE RÉALISATION PARTICULIER

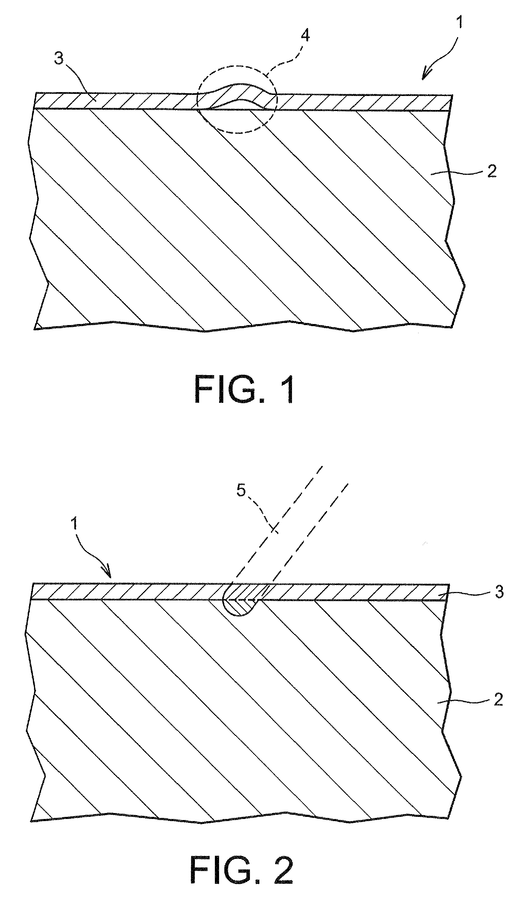

La figure 1 est une vue partielle, en coupe transversale, d'un élément de turbomachine, par exemple une aube 1. L'aube 1 est constituée par un substrat 2, formant le corps de l'élément, et par un revêtement protecteur 3.

Le substrat 2 est un matériau métallique, par exemple à base de nickel, de cobalt, de fer ou de titane. Le revêtement protecteur 3 est par exemple constitué par une couche d'alumine, de zircone, d'oxyde d'yttrium, ou d'un carbure métallique (par exemple de titane ou de tungstène) obtenu par dépôt plasma ou par dépôt laser. L'épaisseur du revêtement est par exemple compris entre 0,05 mm et 0,5 mm. Le revêtement protecteur 3 doit adhérer au substrat 2. Cependant, il peut se produire un ou plusieurs défauts (manque de liaison du revêtement, décohésion du revêtement) comme cela est montré sous la référence 4.

Pour remédier à de tels défauts de liaison, il est proposé, selon la présente invention, de refusionner le revêtement protecteur dans la zone du défaut pour assurer une continuité physique entre le revêtement et le substrat.

La fusion localisée de la couche de revêtement 3 et du substrat sous-jacent 2 est obtenue au moyen d'un faisceau laser 5 comme le montre la figure 2. Le faisceau laser est par exemple émis par un laser YAG et transmis par une fibre optique jusqu'à la zone 6 comprenant une partie du revêtement protecteur 3 et une partie du substrat 2. Les caractéristiques de ce laser YAG peuvent être les suivantes :
- diamètre de la tache focale du faisceau laser (spot) sur l'élément de turbomachine : entre 0,2 mm et 0,8 mm,
- fréquence des impulsions : de 3 à 10 Hz,
- puissance moyenne du faisceau laser : entre 50 et 100 W,
- durée des impulsions : de 5 ms à 15 ms.

On cherchera à avoir une densité d'énergie apportée à chaque zone à récupérer constante quelle que soit la surface de la zone.

Le procédé selon l'invention comporte d'abord une étape de contrôle de l'élément de turbomachine pour repérer les zones présentant un défaut de liaison telles que la zone 4 montrée à la figure 1. Avant cette opération, un nettoyage de la surface de l'élément peut être nécessaire afin d'assurer la qualité métallurgique et mécanique de liaison substrat/revêtement protecteur. La zone concernée est avantageusement exempte de toute pollution (graisse, huile, produit ressuant, ...).

Le profil de chaque zone défectueuse est analysé géométriquement en trois dimensions (positionnement, géométrie, dimension, ...) pour assurer une trajectoire optimale du faisceau laser.

Une fois la caractérisation de l'élément de turbomachine effectuée, la remise en conformité de l'élément est réalisée. Le procédé est mis en oeuvre sans apport de métal. La vitesse d'exécution est pilotée en manuel ou en automatique. La dimension de la tache focale du faisceau laser est adaptée en fonction de la géométrie de la zone de travail. L'énergie moyenne apportée par le faisceau laser est faible (inférieure à 100 W) afin de limiter les déformations et, par exemple dans le cas d'une aube, d'éviter l'effondrement des sommets des aubes.

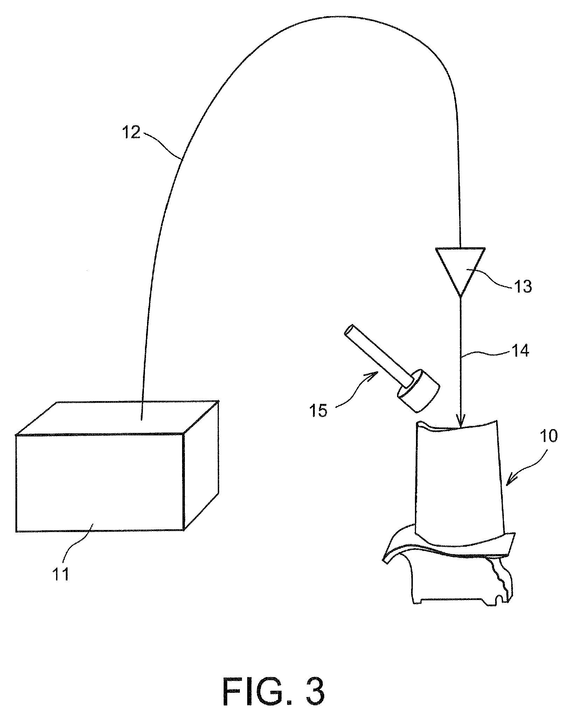

La figure 3 illustre l'opération de suppression des défauts de liaison entre le substrat et le revêtement protecteur d'une aube 10 de turbomachine. La référence 11 représente une source laser, par exemple une source laser YAG. Le faisceau laser émis par la source laser 11 est véhiculé par une fibre optique 12 jusqu'à une tête laser 13. La tête laser 13 dirige le faisceau laser 14 vers les zones à récupérer. Durant l'opération, un système de protection gazeuse 15 protège l'aube de la corrosion et de l'oxydation. La protection gazeuse peut être réalisée par soufflage d'un gaz inerte (par exemple l'argon) ou réducteur.

## Revendications

1. Procédé de récupération d'un élément de turbomachine (1, 10) constitué par un substrat (2), formant le corps de l'élément, et un revêtement protecteur (3) adhérant au substrat, le procédé comprenant :
- le contrôle de l'élément de turbomachine pour repérer les zones présentant un défaut de liaison entre le revêtement protecteur (3) et le substrat (2),
- la suppression des défauts de liaison entre le revêtement protecteur et le substrat, **caractérisé en ce que** les défauts de liaison sont supprimés au moyen d'un faisceau laser (5) dirigé sur chaque zone présentant un défaut de liaison et réalisant une fusion localisée du revêtement protecteur et du substrat sous-jacent pour permettre une liaison saine après refroidissement de chaque zone, au niveau de ladite zone, entre le revêtement protecteur et le substrat après l'arrêt du faisceau laser.

2. Procédé selon la revendication 1, dans lequel les zones présentant un défaut, repérées lors du contrôle de l'élément de turbomachine, sont analysées géométriquement en trois dimensions et enregistrées afin de fournir au faisceau laser un trajet déterminé et de lui conférer les caractéristiques lui permettant de supprimer chaque défaut de liaison.

3. Procédé selon la revendication 2, dans lequel le trajet du faisceau laser sur l'élément de turbomachine est déterminé pour être le plus rapide possible.

4. Procédé selon l'une quelconque des revendications 1 à 3, dans lequel la fusion localisée provoquée par le faisceau laser (14) est réalisée sous atmosphère inerte ou réductrice.

5. Procédé selon l'une quelconque des revendications 1 à 4, dans lequel le faisceau laser (14) est dirigé sur les zones présentant un défaut de liaison au moyen d'une fibre optique (12).

6. Procédé selon l'une quelconque des revendications 1 à 5, dans lequel le faisceau laser (14) est émis par un laser YAG (11).

7. Procédé selon l'une quelconque des revendications 1 à 6, comprenant, après la suppression des défauts de liaison, un nouveau contrôle de l'élément de turbomachine pour vérifier s'il subsiste des défauts de liaison entre le revêtement protecteur et le substrat.

8. Application du procédé selon l'une quelconque des revendications 1 à 7 à la récupération d'aubes ou de léchettes de turbomachines.

## Patentansprüche

1. Verfahren zur Wiederherstellung eines Turbomaschinenelements (1, 10), das durch ein den Körper des Elements bildendes Substrat (2) und einen auf dem Substrat haftenden Schutzüberzug (3) gebildet ist, wobei das Verfahren umfasst:
- das Prüfen des Turbomaschinenelements, um die einen Verbindungsfehler zwischen dem Schutzüberzug (3) und dem Substrat (2) aufweisenden Bereiche ausfindig zu machen,
- das Beseitigen der Verbindungsfehler zwischen dem Schutzüberzug und dem Substrat,
**dadurch gekennzeichnet, dass** die Verbindungsfehler mittels eines Laserstrahls (5), der auf jeden einen Verbindungsfehler aufweisenden Bereich gerichtet wird und ein stellenweises Schmelzen des Schutzüberzugs und des darunterliegenden Substrats vollzieht, beseitigt werden, um nach Abkühlen jedes Bereichs, in Höhe des Bereichs, zwischen dem Schutzüberzug und dem Substrat nach Anhalten des Laserstrahls eine gesunde Verbindung zu ermöglichen.

2. Verfahren nach Anspruch 1, bei dem die einen Fehler aufweisenden Bereiche, die während der Prüfung des Turbomaschinenelements ausfindig gemacht werden, dreidimensional geometrisch analysiert und aufgezeichnet werden, um dem Laserstrahl einen bestimmten Weg zu liefern und um ihm die Eigenschaften zu verleihen, die ihm ermöglichen, jeden Verbindungsfehler zu beseitigen.

3. Verfahren nach Anspruch 2, bei dem der Weg des Laserstrahls auf dem Turbomaschinenelement bestimmt wird, damit er der schnellstmögliche ist.

4. Verfahren nach einem der Ansprüche 1 bis 3, bei dem das durch den Laserstrahl (14) bewirkte stellenweise Schmelzen unter inerter oder reduzierender Atmosphäre vollzogen wird.

5. Verfahren nach einem der Ansprüche 1 bis 4, bei dem der Laserstrahl (14) mittels eines Lichtwellenleiters (12) auf die einen Verbindungsfehler aufweisenden Bereiche gerichtet wird.

6. Verfahren nach einem der Ansprüche 1 bis 5, bei dem der Laserstrahl (14) durch einen YAG-Laser (11) ausgesandt wird.

7. Verfahren nach einem der Ansprüche 1 bis 6, das nach der Beseitigung der Verbindungsfehler eine erneute Prüfung des Turbomaschinenelements umfasst, um zu überprüfen, ob weiterhin Verbindungsfehler zwischen dem Schutzüberzug und dem Substrat vorhanden sind.

8. Anwendung des Verfahrens nach einem der Ansprüche 1 bis 7 auf die Wiederherstellung von Schaufeln oder von Zungen von Turbomaschinen.

## Claims

1. Method of recuperating a turbine element (1, 10) constituted of a substrate (2), forming the body of the element, and a protective coating (3) adhering to the substrate, wherein the method comprises:
- the control of the turbine element in order to pinpoint the zones having a bonding defect between the protective coating (3) and the substrate (2),
- the elimination of the bonding defects between the protective coating and the substrate,
**characterised in that** the bonding defects are eliminated by means of a laser beam (5) directed onto each zone having a bonding defect and inducing a localised melting of the protective coating and the underlying substrate to enable a sound bond after cooling of each zone, at the level of said zone, between the protective coating and the substrate after stopping the laser beam.

2. Method according to claim 1, in which the zones having a defect, pinpointed during the control of the turbine element, are geometrically analysed in three dimensions and recorded in order to provide to the laser beam a determined path and to confer on it the characteristics enabling it to eliminate each bonding defect.

3. Method according to claim 2, in which the path of the laser beam on the turbine element is determined to be as rapid as possible.

4. Method according to any of claims 1 to 3, in which the localised melting induced by the laser beam (14) is carried out under inert or reducing atmosphere.

5. Method according to any of claims 1 to 4, in which the laser beam (14) is directed onto the zones having a bonding defect by means of an optical fibre (12).

6. Method according to any of claims 1 to 5, in which the laser beam (14) is emitted by a YAG laser (11).

7. Method according to any of claims 1 to 6, comprising, after the elimination of the bonding defects, a new control of the turbine element to check if bonding defects remain between the protective coating and the substrate.

8. Application of the method according to any of claims 1 to 7 to the recuperation of turbine blades or knife edge seals.
